# EUROPÄISCHE PATENTSCHRIFT

(11) **EP 0 860 304 B1**
(45) Veröffentlichungstag und Bekanntmachung des Hinweises auf die Patenterteilung: **15.10.2003**
(21) Anmeldenummer: 98102979.6
(22) Anmeldetag: 20.02.1998
(51) Int. Cl.: B60C 17/06, B60C 17/04

(54) **Luftbereiftes Fahrzeugrad**
Vehicle wheel with pneumatic tyre
Roue de véhicule munie d'un bandage pneumatique

(30) Priorität: 24.02.1997 DE 19707090
(43) Veröffentlichungstag der Anmeldung: 26.08.1998
(73) Patentinhaber: Continental Aktiengesellschaft, 30165 Hannover (DE)
(72) Erfinder: Glinz, Michael, 31535 Neustadt (DE); Sergel, Horst, 30657 Hannover (DE); Hellweg, Hans-Bernd, Dr., 30926 Seelze (DE); Huinink, Heinrich, 30823 Garbsen (DE)

(56) Entgegenhaltungen:
- DE-A- 3 507 046
- DE-C- 956 380
- FR-A- 2 282 346
- GB-A- 2 000 733
- US-A- 4 216 810
- US-A- 4 592 403

## Beschreibung

Die Erfindung betrifft ein Fahrzeugrad mit einem auf einer Radfelge befestigten Luftreifen, der im Wesentlichen einen Laufstreifen, zwei Seitenwände, eine Karkasse, Verstärkungselemente sowie zwei mit Wulstkernen versehene Reifenwülste aufweist, wobei innerhalb des Luftreifens ein sich auf der Felge abstützender Notlaufstützkörper angeordnet ist, der eine den Reifen im Schadensfall abstützende Notlauffläche aufweist, welche durch die radial äußere Oberfläche eines im Querschnitt schalenförmigen Ringkörpers gebildet wird, wobei der Ringkörper im Querschnitt in seinen axial äußeren Bereichen eine mit zur Felge geöffneten ersten Krümmungen versehene Kontur aufweist, und eine zwischen den zur Felge geöffneten Krümmungen gelegene und mit zum Zenitbereich des Reifens geöffneten zweiten Krümmung versehene Kontur aufweist, wobei die Krümmungen einen oder mehrere ineinander übergehende Krümmungsradien aufweisen und der schalenförmige Ringkörper auf der Felge abgestützt ist.

Ein derartiges und im Hinblick auf die Seitenführungskräfte optimiertes Fahrzeugrad zeigt die gattungsbildende DE-PS 956 380. Der Notlaufstützkörper, der als völlig starres und mit der Felge verbundenes Metallteil ausgeführt ist, weist in seiner Notlauffläche eine Umfangsnut auf, in die ein gezahnter, nach innen gerichteter Vorsprung des Laufflächenunterbaus eingreifen kann. Im Notlauf ergibt sich ein in axialer Richtung wirkender Formschluss zwischen Notlaufkörper und Reifen, so dass ein Abschälen des Reifens von der Felge verhindert wird. Nachteilig bei einem mit einem solchen Notlaufstützkörper versehenen Fahrzeugrad wirkt sich aber das zusätzliche Gewicht durch den in die Nut einlegbaren gezahnten und nach innen gerichteten Gummiwulst als auch das Gewicht des aufwendig mit einer zweiteiligen Felge verschraubten Notlaufstützkörpers aus. Darüber hinaus ist lediglich eine metallelastische Einfederung für den Notlauf möglich, so dass ein sehr "hartes" und unkomfortables Abrollen im Pannenfall folgen wird.

Ein weiteres mit einem Notlaufstützkörper versehenes Rad ist in der DE-OS 35 07 046 offenbart, wobei der dort gezeigte Notlaufkörper aus einem äußeren metallischen Versteifungsring und einem zwischen Versteifungsring und Felge angeordnetem Polsterring besteht. Der Polsterring sorgt hierbei zwar für eine relativ gute radiale Einfederung, jedoch weist die Kombination aus mangelnder axialer Fixierung und dem im Querschnitt im wesentlichen ebenen metallischen Versteifungsring den Nachteil auf, dass im Notlauf Seitenführungskräfte oder Haltekräfte, die auch ein Abspringen oder Abschälen des Reifens von der Felge verhindern, nur unzureichend aufgebracht werden können.

Als weiterer Nachteil lässt sich bei den beiden genannten Ausführungen und auch bei weiteren im Stand der Technik bekannten Notlaufstützkörpern feststellen, dass durch eine ungünstige Lastverteilung bei der Einleitung von am Umfang des Notlaufstützkörpers wirkenden Kräften auf die Felge Lastspitzen auftreten, die die Felge verformen können.

Die US-A-4,216,810 offenbart ein Fahrzeugrad mit einen komplex ausgeführten System aus einem mehrteiligen Notlaufstützkörper und einem gesonderten, als Wulstsicherung dienenden bead stopper. Die Elemente des Notlaufstützkörpers weisen senkrecht zur Reifenachse verlaufende und nach innen weisende Endabschnitte aufweisende Seitenteile auf. An den Endabschnitten sind Bohrungen ausgebildet, in welche Bolzen der bead stopper eingreifen, um sowohl diese als auch die Elemente des Notlaufstützkörpers in ihren Lagen innerhalb des Reifens bzw. an der Felge zu fixieren.

Die der Erfindung zugrunde liegende Aufgabe bestand also darin, ein Fahrzeugrad für Luftbereifung mit einem Notlaufstützkörper bereitzustellen, welches im Notlauf einerseits ein weiterhin sicheres Fahrverhalten und ein ausreichend elastisches Abrollen aufrechterhält, andererseits ohne übermäßige Gewichtserhöhung Seitenführungskräfte sicher übertragen kann, und darüber hinaus eine Lastverteilung bei einwirkenden Kräften entstehen läßt, die eine Schädigung der Felge sicher vermeidet.

Gelöst wird diese Aufgabe durch die Kombination der Merkmale des Auspruchs 1.

Mit dem Ziel einer sicheren Fixierung der Reifenwülste auch im Notlauf lassen sich die Stützelemente so ausbilden, dass sie in den den Reifenwülsten benachbarten Bereichen auf der Felge abgestützt sind und als Wulstsicherung dienen. Somit lassen sich auch Sicken und Vorsprünge in der Felge vereinfachen und damit der Herstellaufwand reduzieren.

Durch die Kontur, die im Wesentlichen die Aufteilung der Notlauffläche in zwei aufliegende Schulterbereiche und einen mehr oder weniger stark ausgeprägten Rücksprungbereich beinhaltet, ergibt sich im Zusammenwirken mit der Kurvenform, der Krümmung und den Kraftaufnahme- und Elastizitätseigenschaften der Stützelemente ein Laufverhalten im Pannenlauf, welches sich zwar vom Normalfall unterscheidet, jedoch die Fahrbereitschaft des Fahrzeuges vollständig erhält und in der Handhabung sich nur geringfügig vom Normallauf unterscheidet.

Insbesondere die Fähigkeit zur Aufnahme von Seitenführungskräften ist ausgeprägt, da durch den in den mittleren Bereiche der Notlauffläche bereitgestellten Rücksprung sich die mittleren Teile der Reifenlauffläche bzw. des Unterbaus in die Krümmung einschmiegen können und so in Bezug auf Seitenkräfte einen Formschluss aufbauen können, der die auf die Reifenseiten wirkende Zugkräfte auf ein für das Fahrverhalten ungefährliches Maß reduziert und somit sicher ein Abspringen des Reifens von der Felge verhindert. Die Krümmungsradien sind dabei durch stetig ineinander übergehende Krümmungsradien so ausgebildet, dass im Zusammenwirken mit der Laufflächendicke des Reifens Punkt- oder Linienbelastungen, die zur Zerstörung der Lauffläche führen könnten, nicht auftreten.

Ein weiterer Vorteil eines mit solchen Krümmungen ausgebildeten schalenförmigen Ringkörpers besteht darin, dass während des Notlaufs sehr hohe Punktbelastungen auch etwa beim Überfahren einer Bordsteinkante, aufgenommen werden können und durch die mit Hilfe der Formgebung erhöhte Steifigkeit des schalenförmigen Ringkörpers eine gleichmäßige und für die Felge unschädliche Lastverteilung sich einstellt.

In aller Regel ist hierbei der schalenförmige Ringkörper so ausgebildet, dass er sich axial von der Äquatorialebene des Reifens symmetrisch über einen Teilbereich der Felgenbreite erstreckt. Lediglich bei Fahrzeugen mit ausgeprägt starkem Sturz, d.h. mit starker Schrägstellung der Räder, kann es erforderlich werden, auf eine symmetrische Kontur zu verzichten und die Krümmungsbereiche an die Schrägstellung der Räder anzupassen.

In einer insbesondere im Hinblick auf den Kompromiss zwischen Gewichtsoptimierung und Laufverhalten vorteilhaften Ausbildung erheben sich die axial äußeren Bereiche mit den ersten Krümmungen maximal bis zur Häfte, vorzugsweise bis zu einem Drittel der Reifenquerschnittshöhe. Bei einer Reifengröße von z.B. 195/65 und einem Felgendurchmesser von 15 Zoll besitzen die ersten Krümmungen einen Abstand von etwa 42 mm zur Felgenschulter. Damit steht eine ausreichende Höhe von zwei Dritteln der Reifenquerschnittshöhe für den normalen Fahrbetrieb und die dort auftretenden Einfederungen zur Verfügung.

Im Zusammenwirken mit einer Ausbildung, bei der der Ringkörper im Bereich der zweiten Krümmung einen Mindestdurchmesser aufweist, der größer ist als der Durchmesser der Felgenhörner, lassen sich die Notlaufstützkörper leicht an bestehende Reifengrößen und Felgenabmessungen anpassen und verhindern im Notlauf ein zu starkes Walken des Reifens in den Seitenbereichen.

In einer vorteilhaften Ausbildung sind dabei die Stützelemente als Verlängerungen der axial äußeren Bereiche der zur Felge geöffneten ersten Krümmungen und als sich auf der Felge abstützende im wesentlichen ebene Kreisringscheiben ausgebildet.

Während ein Vorteil herstellerseitig darin liegt, dass - je nach Herstellung als einteiliger bzw. als aus mehreren Teilen bestehender Notlaufkörper - ein von einer ringförmigen Ronde ausgehendes Drück- bzw. Rollformgebungsverfahren oder ein mit einfachen Werkzeugen darstellbares Form- oder Spritzverfahren genutzt werden kann, ergibt sich im Hinblick auf die Montage, dass der Notlaufkörper in besonders einfacher Weise auf die Felgenform und -breite angepasst und in seinem im wesentlichen durch die Stützkörper aufgeprägten Federungsverhalten beeinflusst werden kann.

In einer besonders vorteilhaften Ausbildung ist eine an den Ringkörper als Verlängerung der axial äußeren Bereiche sich anschließende Kreisringscheibe vorhanden, die in einem Winkelbereich von 75° bis 90°, vorzugsweise 83° zur Radachse geneigt ist, wobei im Querschnitt der Übergang von der mit den ersten Krümmungen versehenen Kontur des Ringkörpers auf die ebenen Kreisringscheiben stufenlos ausgebildet ist.

Im Zusammenspiel mit der Krümmung der Notlauffläche ist die sich durch die 83° Neigung ergebende federnde Abstützung ausreichend für ein gutes Notlaufverhalten und erfordert durch die relativ steile Winkeleinstellung ein Minimum an Material für den Notlaufstützkörper, was wiederum der Gewichtsreduzierung entgegenkommt.

Eine vorteilhafte Ausführung, bei der die Stützelement und der schalförmige Ringkörper aus gleichem Material, vorzugsweise aus Aluminium oder aus einer Aluminiumlegierung bestehen, erleichtert und vereinfacht die Herstellung und läßt auch im Hinblick auf die spätere Wiederverwertung eine Sortierung und Trennung von Reststoffen mit wenig Aufwand durchführbar werden.

Eine solche Ausführung aus Aluminium erfordert in aller Regel eine zweiteilige Felge oder eine vorgeformte Felge, die nach Aufbringen des Reifens und des Notlaufstützkörpers formgebend auf ihr Fertigmaß verarbeitet wird.

In einer weiteren Ausbildung, bei der die Stützelemente und der schalenförmige Ringkörper unterschiedliche Elastizitäten aufweisen, bestehen die Stützelemente aus gummielastischem oder elastoplastischem Material und der schalenförmige Ringkörper aus Aluminium oder einer Aluminiumlegierung. Hier ergibt sich der Vorteil, dass durch die gut verformbaren gummielastischen Materialien der Stützelemente wiederum normale Standardfelgen verwendet werden können und sich somit eine einfache Nachrüstung im Betrieb befindlicher Fahrzeugräder ermöglicht wird.

Für die Stützelemente können natürlich auch viskoelastische, elastoplastische oder viskoplastische Materialien genutzt werden, die etwa aus Polymeren oder Gummi mit unterschiedlichen Füll- und Zuschlagstoffen in ihren Eigenschaften einstellbar sind.

Als gummielastische Materialien finden auch Polyurethanschäume odere andere Elastomerschaumstoffe Anwendung.

Als Aluminiummaterial hat sich die Legierung AL Mn Si 08 bewährt, wobei der schalenförmige Ringkörper im wesentlichen lediglich in einer Dicke von 4 - 6 mm und die gummielastischen oder elastoplastischen Materialien der Stützelemente in einer Dicke von etwa 8 mm ausgebildet sind.

In einer weiteren vorteilhaften Ausbildung sind die Stützelemente aus gummielastischem Material gefertigt und der schalenförmige Ringkörper besteht aus einem im Vergleich zum gummielastischen oder elastoplastischen Material härteren Kunststoff, d.h. aus einem Kunststoff mit höherem Elastizitätsmodul und höherer Festigkeit. Beim Spritzgießverfahren ergeben sich bei einer solchen Ausbildung Vorteile durch einen einfachen Herstellungsprozess, bei dem beim Einspritzen nach dem Bi-Injektions- oder Co-Injektionsverfahren in die vorhandene Form lediglich eine weitere Materialmischung über eine oder mehrere Zusatzdüsen zugeführt werden muss, um den Verlauf der Festigkeiten und der Elastizitäten zu beeinflussen.

Diese vorteilhafte Ausbildung kann noch dadurch weiter verfeinert werden, dass der schalenförmige Ringkörper aus faserverstärktem Kunststoff besteht. In solchen Fällen können etwa vorhandene Spritzformen oder Kunststoffgesenke mit z.B. Glasfasermatten teilweise ausgelegt werden, wonach lediglich ein kurzer Einspritzvorgang für das Herstellen genügt.

Als weiterer Vorteil bei den Kunststoffen ergibt sich natürlich das auch im Vergleich zum Aluminium weiter reduzierte Gewicht, so dass für die jeweiligen Fahrzeugtypen und Gewichtsbelastungen der Räder die jeweils optimale Materialkombination ausgelegt werden kann.

Die Anbindung der unterschiedlichen Materialien untereinander kann durch Kleben, durch Vulkanisieren, durch Vernetzen oder auch durch Formschluss mittels ineinander verhakter Formen erfolgen, wobei bei jeder Ausbildung aus der zur Verfügung stehenden Vielzahl von Verbindungsmethoden die jeweils passende ausgewählt werden kann. Für den Fall, dass besonders stabile Ganzmetallausführungen der Notlaufstützkörper benötigt werden, etwa bei Rädern von hochbelasteten Behördenfahrzeugen, besteht eine vorteilhafte Ausbildung darin, dass die Stützelemente aus Federstahl und der schalenförmige Ringkörper aus Aluminium bestehen. Hierdurch ergibt sich eine hoheTragfähigkeit des Notlaufstütztkörpers bei gleichzeitig relativ moderater Steigerung des Gewichtes des Rades.

Neben der Nutzung und Ausbildung der materialelastischen Eigenschaften der Stützelemente besteht eine weitere vorteilhafte Ausbildung darin, dass die Stützelemente federnd in radialer Richtung wirkende Sicken, Nuten oder Einschnitte aufweisen, so dass auch formelastische Anteile der Stützelemente mit zur Ausbildung eines optimierten und komfortablen Abrollverhaltens genutzt werden.

In einer weiteren vorteilhaften Ausbildung ist der schalenförmige Ringkörper durch auf seiner zur Felge gerichteten Unterseite befindliche und in Umfangs- oder Axialrichtung verlaufende Rippen verstärkt.

Eine solche Ausbildung erlaubt das Auffangen von Belastungsspitzen und eine weitere Gewichtseinsparung durch Reduzierung der Wanddicke in weniger belasteten Bereichen.

Ebenso kann natürlich eine reine Veränderung bzw. Anpassung der Wanddicke des Notlaufstützkörpers entweder in den Bereichen der Stützelemente oder über die axiale Erstreckung des schalenförmigen Ringkörpers dazu beitragen, dass eine Gewichtseinsparung ermöglicht wird.

Anhand von Ausführungsbeispielen soll die Erfindung näher erläutert werden. Es zeigen:
- Fig. 1: einen erfindungsgemäßen einteiligen Notlaufstützkörper aus Aluminium
- Fig. 2: einen erfindungsgemäßen einteiligen Notlaufstützkörper, dessen Stützelemente zusätzliche Formelastizität bereitstellen
- Fig. 3: einen aus zwei verschiedenen Materialien bestehenden Notlaufstützkörper
- Fig. 4: einen einteiligen Notlaufstützkörper mit einer umlaufenden Verstärkungsrippe im Mittelbereich.

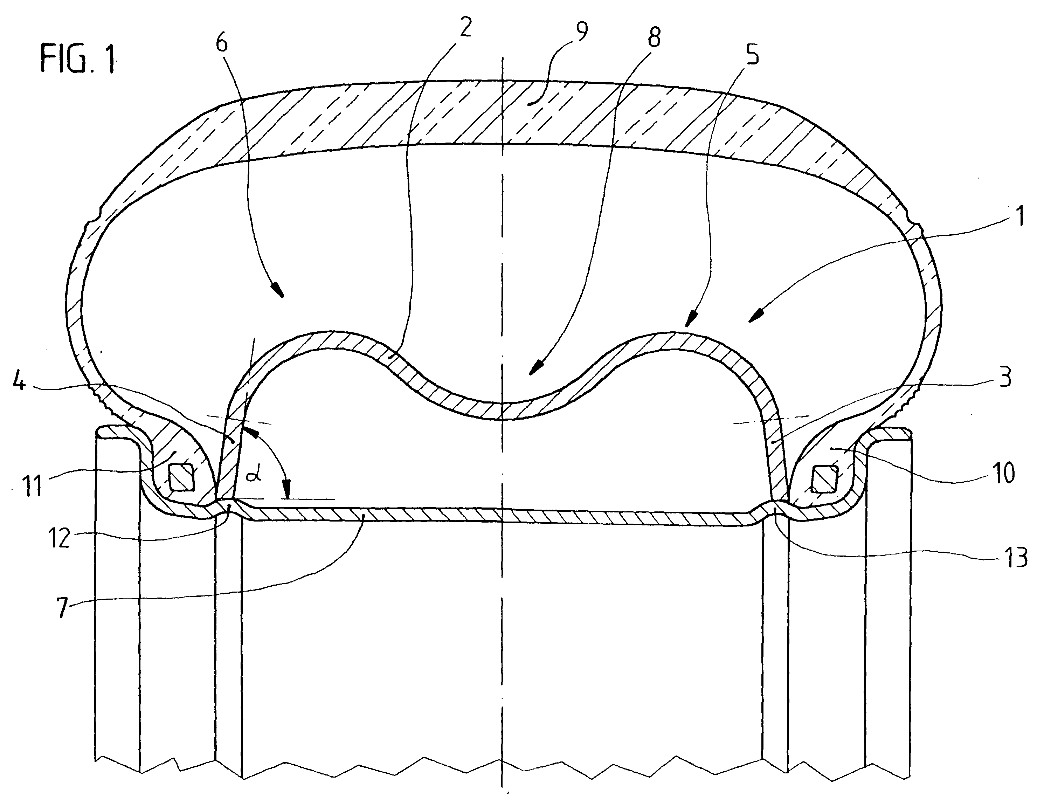

In der Figur 1 erkennt man den Notlaufstützkörper 1, der aus einem im Querschnitt schalenförmigen Ringkörper 2 und den Stützelementen 3 und 4 besteht. Der Stützkörper 2 weist hierbei in seinen axial äußeren Bereichen 5 und 6 eine mit zur Felge 7 geöffneten ersten Krümmung versehene Kontur auf.

Zwischen diesen zur Felge 7 geöffneten Krümmungen befindet sich ein Bereich 8 mit einer mit zum Zenitbereich des Reifens 9 geöffneten zweiten Krümmung versehenen Kontur.

Die Krümmungen der Bereiche 5, 6 und 8 weisen dabei ineinander gehende Krümmungsradien auf, wobei die Krümmungen der Bereiche 5 und 6 stufenlos in die Kontur der Stützelemente 3 und 4 übergehen. Diese Stützelemente sind als im wesentlichen ebene Kreisringscheiben ausgebildet und stützen sich in den den Reifenwülsten 10 und 11 benachbarten Bereichen auf der Felge 7 ab.

Die Kreisringscheiben sind hierbei um einen Winkel α von 83° zur Radachse geneigt, wobei die hier vorgegebene Neigung zur Reifenmitte hin gerichtet ist.

Die die Felgen 7 berührenden Flächen der Stützelemente 3 und 4 sind hierbei an die Form der zur Wulstsicherung vorgesehenen Sicken 12 und 13 (Hump) angepasst, wodurch sich eine sichere Positionierung und eine zusätzliche Wulstsicherung insbesondere auch im Notlauf ergibt.

Der schalenförmige Ringkörper 2 ist bei dieser Ausführung in Bezug auf die Reifenbreite symmetrisch ausgebildet.

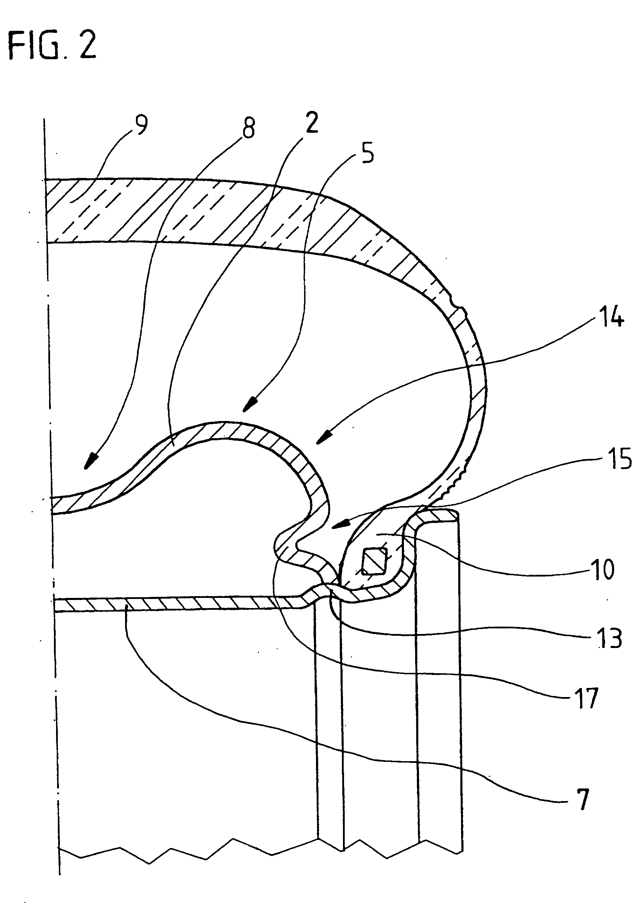

Die Figur 2 zeigt anhand eine Querschnittes durch die Hälfte eines Fahrzeugrades einen Notlaufstützkörper 14, bei dem der schalenförmige Ringkörper 2 durch Stützelemente 15 auf der Felge 7 abgestützt wird.

Das Stützelement 15 besteht hierbei, wie in der Fig. 1 bereits gezeigt, aus einer als Verlängerung der axial äußeren Bereiche des schalenförmigen Ringkörpers ausgebildeten Kreisringscheibe, die jedoch eine Sicke 17 aufweist, und somit neben den materialelastischen Eigenschaften auch formelastisch wirkt.

Auch hier liegt das Stützelement im Bereich der Reifenwülste auf der Felge 7 auf und bildet so eine zusätzliche Wulstsicherung.

Natürlich können auch beide Stützelemente eines schalenförmigen Ringkörpers unterschiedlich ausgebildet werden, so dass z. B. bei einem stark schräggestellten Rad das innenliegende Stützelement eine Sicke aufweist.

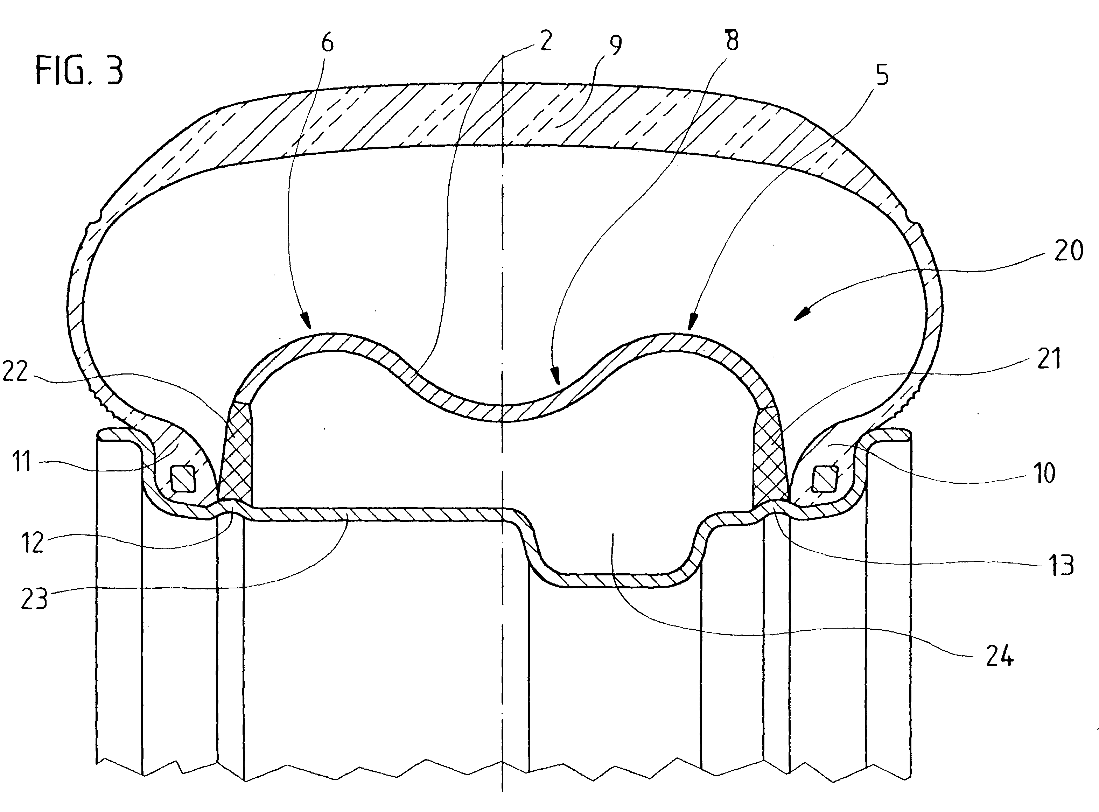

Die Figur 3 zeigt einen Notlaufstützkörper 20, dessen Stützelemente 21 und 22 in Verlängerung der axial äußeren Bereiche als Kreisringscheiben ausgebildet sind, die aus gummielastischem Material bestehen. Der schalenförmige Ringkörper 2 besteht hierbei aus einer Aluminiumlegierung.

Während die in den Figuren 1 und 2 gezeigten Ausführungen auf eine Felge 7 aufgebracht werden, die entweder zweiteilig oder lediglich vorgeformt und nach dem Aufbringen des Notlaufstützkörpers und des Reifens formgebend auf ihr Fertigmaß verarbeitet wird, lässt sich der Notlaufstützkörper 20 auf eine Standardfelge 23 mit einem Tiefbett 24 aufbringen.

Die Dicke der gummielastischen Stützkörper mit im Fußbereich etwa 8 mm überschreitet die Dicke des Aluminiummateriales des schalenförmigen Ringkörpers 2, welches lediglich in einer Stärke von 4 bis 6 mm ausgebildet ist. Die somit eingestellte höhere Wanddicke des gummielastischen Materiales erlaubt eine sichere Abstützung bei gleichzeitig noch ausreichendem Verformungsvermögen für das Aufbringen auf die Standardfelge 23.

Eine solche Ausbildung weist weiterhin den Vorteil auf, dass die an den Felgen 23 anliegende Fußfläche der Stützelemente 21 und 22 nicht auf die Form der zur Wulstsicherung eingebrachten Sicken 12 und 13 angepasst werden muss, da sich das gummielastische Material durch Relaxation an solche Bereiche vollständig anformt.

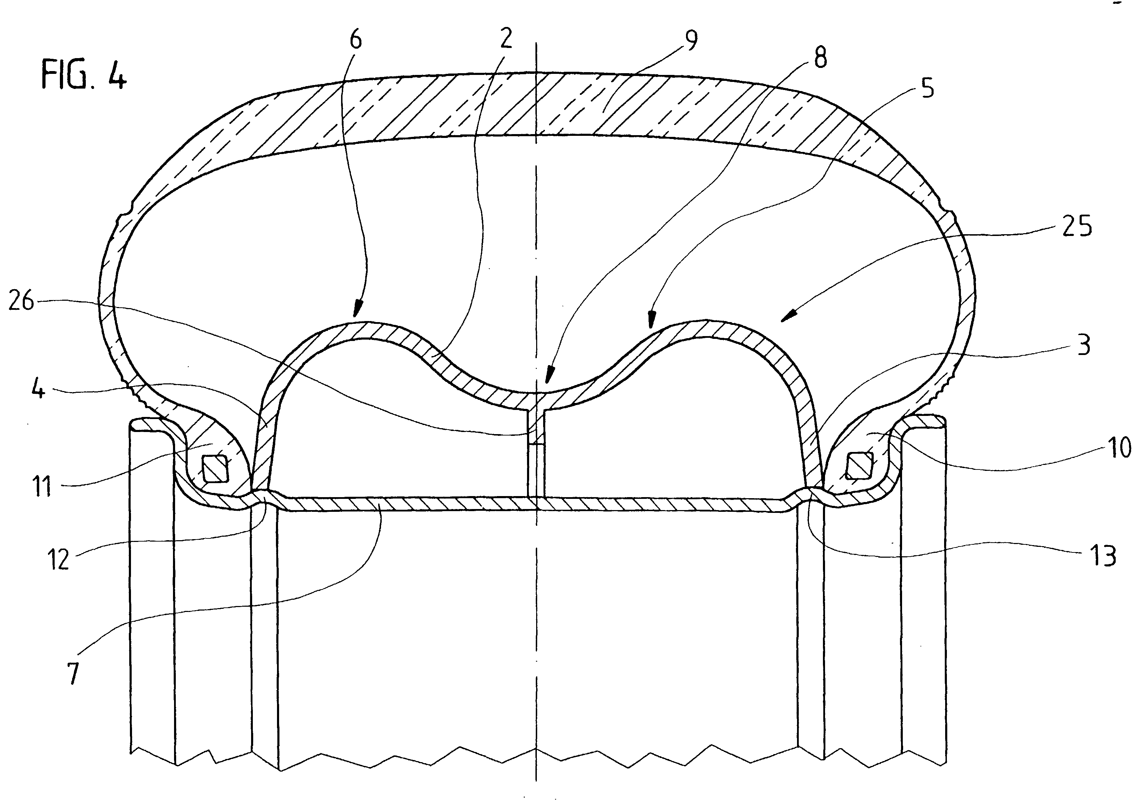

Die Figur 4 zeigt einen Notlaufstützkörper 25, der im wesentlichen aufgebaut ist wie der in der Fig. 1 dargestellte Notlaufstützkörper 1.

Auch hier besteht der Notlaufstützkörper 25 aus einem schalenförmigen Ringkörper 2, bei dem die Stützelemente 3 und 4 als Verlängerungen der axial äußeren Bereiche und als sich auf der Felge abstützende im wesentlichen ebene Kreisringscheiben ausgebildet sind.

Im Unterschied zu dem in der Fig. 1 dargestellten Notlaufstützkörper weist der hier gezeigte jedoch in seinem mittleren Bereich 8 eine umlaufende und zur Radmitte weisende Verstärkungsrippe 26 auf, die es erlaubt, den schalenförmigen Ringkörper für höhere Belastungen einzusetzen.

### Bezugszeichenliste

- 1: Notlaufstützkörper
- 2: schalenförmiger Ringkörper
- 3, 4: Stützelement
- 5, 6: axial äußerer Bereich
- 7: Felge
- 8: Bereich mit zum Zenit des Reifens geöffneten Krümmung
- 9: Reifen
- 10, 11: Reifenwulst
- 12, 13: Sicke (Hump)
- 14: Notlaufstützkörper
- 15: Stützelement
- 17: Sicke
- 20: Notlaufstützkörper
- 21, 22: Stützelement
- 23: Standardfelge
- 24: Tiefbett
- 25: Notlaufstützkörper
- 26: Verstärkungsrippe

## Patentansprüche

1. Fahrzeugrad mit einem auf einer Radfelge (7,23) befestigten Luftreifen (9), der im Wesentlichen einen Laufstreifen, zwei Seitenwände, eine Karkasse, Verstärkungselemente sowie zwei mit Wulstkernen versehene Reifenwülste (10,11) aurweist, wobei innerhalb des Luftreifens ein sich auf der Felge abstützender Notlaufstützkörper (1,14,20,25) angeordnet ist, der eine den Reifen im Schadensfall abstützende Notlauffläche aufweist, welche durch die radial äußere Oberfläche eines im Querschnitt schalenförmigen Ringkörpers (2) gebildet wird, wobei der Ringkörper im Querschnitt in seinen axial äußeren Bereichen (5,6) eine mit zur Felge geöffneten ersten Krümmungen versehene Kontur aufweist, und einen zwischen den zur Felge geöffneten ersten Krümmungen gelegenen mittleren Bereich (8) mit zum Zenitbereich des Reifens geöffneten zweiten Krümmung versehene Kontur aufweist, wobei die Krümmungen einen oder mehrere ineinander übergehende Krümmungsradien aufweisen und der schalenförmige Ringkörper über mindestens ein Stützelement (3,4,15,21,22) auf der Felge abgestützt ist,
**dadurch gekennzeichnet,**
**dass** an die beiden axial außeren Bereiche (5, 6) des schalenförmigen Ringkörpers (2) jeweils anschließend ein radial nach innen weisendes in einem Winkel (α) zur Radachse geneigtes und zur Reifenmitte hin gerichtetes Stützelement (3, 4, 15, 21, 22) vorgesehen ist, das sich, eine zusätzliche Wulstsicherung bildend, in den den Reifenwülsten Benachbarten Bereichen auf der Felge (7, 23) abstützt.

2. Fahrzeugrad nach Anspruch 1, **dadurch gekennzeichnet, dass** die axial äußeren Bereiche mit den ersten Krümmungen sich maximal bis zur Hälfte, vorzugsweise bis zu einem Drittel, der Reifenquerschnittshöhe erheben.

3. Fahrzeugrad nach Anspruch 1 oder 2, **dadurch gekennzeichnet, dass** der Ringkörper im Bereich der zweiten Krümmung einen Mindestdurchmesser aufweist, der größer ist als der Außendurchmesser der Felgenhörner.

4. Fahrzeugrad nach Anspruch 1 bis 3, **dadurch gekennzeichnet, dass** die Stützelemente als Verlängerungen der axial äußeren Bereiche der zur Felge geöffneten ersten Krümmungen und als sich auf der Felge abstützende im wesentlichen ebene Kreisringscheiben (3,4) ausgebildet sind.

5. Fahrzeugrad nach Anspruch 4, **dadurch gekennzeichnet, dass** die an den Ringkörper als Verlängerung der axial äußeren Bereiche sich anschließenden Stützelemente in einem Winkelbereich (α) von 75° bis 90° zur Radachse geneigt sind, wobei im Querschnitt der Übergang von der mit den ersten Krümmungen versehenen Kontur des Ringkörpers auf die Stützelemente stufenlos ausgebildet ist.

6. Fahrzeugrad nach Anspruch 1 bis 3, **dadurch gekennzeichnet, dass** die Stützelemente als zwischen schalenförmigem Ringkörper (2) und Felge (23) angeordnete Stützringe (21,22) ausgebildet sind.

7. Fahrzeugrad nach Anspruch 1 bis 6, **dadurch gekennzeichnet, dass** die Stützelemente aus gummielastischem oder elastoplastischem Material und der schalenförmige Ringkörper aus Aluminium oder einer Aluminiumlegierung bestehen.

8. Fahrzeugrad nach Anspruch 1 bis 6, **dadurch gekennzeichnet, dass** die Stützelemente aus gummielastischem oder elastoplastischem Material und der schalenförmige Ringkörper aus einem im Vergleich zum Material der Stützelemente härteren Kunststoff bestehen.

9. Fahrzeugrad nach Anspruch 8, **dadurch gekennzeichnet, dass** der schalenförmige Ringkörper aus faserverstärktem Kunststoff besteht.

10. Fahrzeugrad nach Anspruch 7 bis 9, **dadurch gekennzeichnet, dass** die Stützelemente (21,22) aus gummielastischem oder elastoplastischem Material eine größere Wanddicke als der schalenförmige Ringkörper aufweisen.

11. Fahrzeugrad nach Anspruch 1 bis 6, **dadurch gekennzeichnet, dass** der schalenförmige Ringkörper aus Aluminium und die Stützelemente aus Federstahl bestehen.

12. Fahrzeugrad nach Anspruch 1 bis 11, **dadurch gekennzeichnet, dass** die Stützelemente (15) in radialer Richtung federnd wirkende Sicken (17), Nuten oder Einschnitte aufweisen.

13. Fahrzeugrad nach einem oder mehreren der vorhergehenden Ansprüche, **dadurch gekennzeichnet, dass** der schalenförmige Ringkörper (2) durch auf seiner zur Felge gerichteten Unterseite befindliche und in Umfangs- oder Axialrichtung verlaufende Rippen (26) verstärkt ist.

14. Fahrzeugrad nach einem oder mehreren der Ansprüche 1 bis 6, 12 und 13, **dadurch gekennzeichnet, dass** der Notlaufstützkörper aus Aluminium oder einer Aluminiumlegierung besteht.

## Claims

1. Vehicle wheel, having a pneumatic tyre (9), which is mounted on a wheel rim (7, 23) and substantially includes a tread strip, two sidewalls, a carcase, reinforcing elements and two tyre beads (10, 11) which are provided with bead cores, an emergency running support (1, 14, 20, 25), which is supported on the rim, being disposed internally of the pneumatic tyre and having an emergency running area, which supports the tyre in the event of the latter becoming damaged and is formed by the radially outer surface of an annular body (2), which has a dish-shaped cross-section, the annular body having, in its axially outer regions (5, 6) when viewed in cross-section, a contour provided with first curvatures open towards the rim, and having a central region (8), which is situated between the first curvatures open towards the rim and has a contour provided with a second curvature open towards the crown region of the tyre, the curvatures having one or more radii of curvature which pass into one another, and the disc-shaped annular body being supported on the rim via at least one supporting element (3, 4, 15, 21, 22), **characterised in that** a respective radially inwardly pointing supporting element (3, 4, 15, 21, 22) is provided so as to communicate with the two axially outer regions (5, 6) of the dish-shaped annular body (2), which supporting element is inclined at an angle (α) relative to the wheel axle and is orientated towards the centre of the tyre, said supporting element being supported on the rim (7, 23) in the regions adjacent the tyre beads so as to. form an additional bead securement.

2. Vehicle wheel according to claim 1, **characterised in that** the axially outer regions with the first curvatures rise to a maximum of half the cross-sectional height of the tyre, preferably a third thereof.

3. Vehicle wheel according to claim 1 or 2, **characterised in that**, in the region of the second curvature, the annular body has a minimum diameter which is greater than the external diameter of the rim flanges.

4. Vehicle wheel according to claims 1 to 3, **characterised in that** the supporting elements are in the form of extensions of the axially outer regions of the first curvatures, which are open towards the rim, and in the form of substantially flat circular discs (3, 4) which are supported on the rim.

5. Vehicle wheel according to claim 4, **characterised in that** the supporting elements, which communicate with the annular body as an extension of the axially outer regions, are inclined within an angular range (α) of from 75° to 90° relative to the wheel axle, the transition from the contour of the annular body, which is provided with the first curvatures, to the supporting elements being stepless when viewed in cross-section.

6. Vehicle wheel according to claims 1 to 3, **characterised in that** the supporting elements are in the form of supporting rings (21, 22), which are disposed between the dish-shaped annular body (2) and the rim (23).

7. Vehicle wheel according to claims 1 to 6, **characterised in that** the supporting elements are formed from rubber-elastic or elastoplastic material, and the dish-shaped annular body is formed from aluminium or an aluminium alloy.

8. Vehicle wheel according to claims 1 to 6, **characterised in that** the supporting elements are formed from rubber-elastic or elastoplastic material, and the dish-shaped annular body is formed from a plastics material which is harder than the material of the supporting elements.

9. Vehicle wheel according to claim 8, **characterised in that** the dish-shaped annular body is formed from fibre-reinforced plastics material.

10. Vehicle wheel according to claims 7 to 9, **characterised in that** the supporting elements (21, 22), formed from rubber-elastic or elastoplastic material, have a greater wall thickness than the dish-shaped annular body.

11. Vehicle wheel according to claims 1 to 6, **characterised in that** the dish-shaped annular body is formed from aluminium, and the supporting elements are formed from spring steel.

12. Vehicle wheel according to claims 1 to 11, **characterised in that** the supporting elements (15) have fins (17), grooves or incisions which act in a resilient manner in the radial direction.

13. Vehicle wheel according to one or more of the preceding claims, **characterised in that** the dish-shaped annular body (2) is reinforced by ribs (26), which are situated on its underside orientated towards the rim and extend in the circumferential or axial direction.

14. Vehicle wheel according to one or more of claims 1 to 6, 12 and 13, **characterised in that** the emergency running support is formed from aluminium or an aluminium alloy.

## Revendications

1. Roue de véhicule comprenant un bandage pneumatique (9) fixé sur une jante de roue (7, 23), lequel bandage pneumatique comprend essentiellement une bande de roulement, deux flancs, une carcasse, des éléments de renfort ainsi que deux talons de pneumatique (10, 11) dotés de tringles, où est disposé, à l'intérieur du bandage pneumatique, un corps support de fonctionnement de secours (1, 14, 20, 25) s'appuyant sur la jante, lequel corps support présente une surface de roulement de secours supportant le pneumatique en cas de dommage,
laquelle surface de roulement de secours est formée par la surface extérieure radiale d'un corps annulaire (2) en forme de coque en coupe transversale, où le corps annulaire présente, dans ses zones extérieures axiales (5, 6), en coupe transversale, un contour doté de premières courbures ouvertes sur la jante, et présente une zone centrale (8) placée entre les premières courbures ouvertes sur la jante et un contour doté d'une seconde courbure ouverte sur la zone du sommet du pneumatique, où les courbures présentent un ou plusieurs rayons de courbure se succédant, le corps annulaire en forme de coque étant en appui sur la jante, sur au moins un élément support (3, 4, 15, 21, 22),
**caractérisée en ce qu'**il est prévu, ensuite, sur les deux zones extérieures axiales (5, 6) du corps annulaire (2) en forme de coque, à chaque fois un élément support (3, 4, 15, 21, 22) pointant vers l'intérieur dans le sens radial et incliné suivant un angle (α) par rapport à l'essieu et tourné vers le milieu du pneumatique, lequel élément support s'appuie sur la jante (7, 23) dans les zones voisines des talons du pneumatique, formant une sécurité supplémentaire pour les talons.

2. Roue de véhicule selon la revendication 1, **caractérisée en ce que** les zones extérieures axiales, comportant les premières courbures, sont en saillie au maximum de la moitié, de préférence d'un tiers de la hauteur en coupe transversale du pneumatique.

3. Roue de véhicule selon la revendication 1 ou 2,
**caractérisée en ce que** le corps annulaire présente, dans la zone de la seconde courbure, un diamètre minimum qui est plus grand que le diamètre extérieur des rebords de jante.

4. Roue de véhicule selon les revendications 1 à 3,
**caractérisée en ce que** les éléments supports sont conformés comme des prolongements des zones extérieures axiales des premières courbures ouvertes sur la jante et comme des disques annulaires circulaires (3, 4), pratiquement plans, s'appuyant sur la jante.

5. Roue de véhicule selon la revendication 4, **caractérisée en ce que** les éléments supports faisant suite au corps annulaire conformé comme un prolongement des zones extérieures axiales sont inclinés par rapport à l'essieu, suivant une plage angulaire (α) variant entre 75° et 90°, où, en coupe transversale, la transition du contour du corps annulaire doté des premières courbures sur les éléments supports est configurée de façon continue.

6. Roue de véhicule selon les revendications 1 à 3,
**caractérisée en ce que** les éléments supports sont configurés comme des anneaux supports (21, 22) disposés entre un corps annulaire (2) en forme de coque et une jante (23).

7. Roue de véhicule selon les revendications 1 à 6,
**caractérisée en ce que** les éléments supports sont composés d'une matière élastique en caoutchouc ou d'une matière élastoplastique, le corps annulaire en forme de coque étant en aluminium ou en alliage d'aluminium.

8. Roue de véhicule selon les revendications 1 à 6,
**caractérisée en ce que** les éléments supports sont composés d'une matière élastique en caoutchouc ou d'une matière élastoplastique, le corps annulaire en forme de coque se composant d'une matière plastique plus dure par comparaison avec la matière des éléments supports.

9. Roue de véhicule selon la revendication 8, **caractérisée en ce que** le corps annulaire en forme de coque se compose d'une matière plastique renforcée par des fibres.

10. Roue de véhicule selon les revendications 7 à 10,
**caractérisée en ce que** les éléments supports (21, 22), composés d'une matière élastique en caoutchouc ou d'une matière élastoplastique, présentent une épaisseur de paroi plus importante que le corps annulaire en forme de coque.

11. Roue de véhicule selon les revendications 1 à 6,
**caractérisée en ce que** le corps annulaire en forme de coque est en aluminium, les éléments supports étant en acier pour ressorts.

12. Roue de véhicule selon les revendications 1 à 11,
**caractérisée en ce que** les éléments supports (15) présentent des moulures (17), des rainures ou des entailles agissant de façon élastique en direction radiale.

13. Roue de véhicule selon l'une quelconque ou plusieurs des revendications précédentes, **caractérisée en ce que** le corps annulaire (2) en forme de coque est renforcé par des nervures (26) se trouvant sur le dessous - tourné vers la jante - du corps annulaire et s'étendant en direction circonférentielle ou axiale.

14. Roue de véhicule selon l'une quelconque ou plusieurs des revendications 1 à 6, 12 et 13, **caractérisée en ce que** le corps support de fonctionnement de secours est en aluminium ou en alliage d'aluminium.
